# EUROPEAN PATENT SPECIFICATION

(11) **EP 3 401 210 B1**
(45) Date of publication and mention of the grant of the patent: **26.06.2019**
(21) Application number: 18158004.4
(22) Date of filing: 22.02.2018
(51) Int. Cl.: B64C 1/40, B64C 1/38, H01F 7/02, H01F 7/06, H02N 15/00, B64C 30/00

(54) **THERMAL INSULATION FOR AIRCRAFT COMPONENTS AND METHOD OF ASSEMBLING AND USING THE SAME**
WÄRMEDÄMMUNG FÜR FLUGZEUGBAUTEILE UND VERFAHREN ZUR MONTAGE UND VERWENDUNG DAVON
ISOLATION THERMIQUE POUR DES COMPOSANTS D'AÉRONEF ET PROCÉDÉ D'ASSEMBLAGE ET D'UTILISATION ASSOCIÉS

(30) Priority: 09.05.2017 US 201715590693
(43) Date of publication of application: 14.11.2018
(73) Proprietor: The Boeing Company, Chicago, IL 60606-2016 (US)
(72) Inventor: Clemen, Mark Joseph Jr, Chicago, IL Illinois 60606-2016 (US); Wert, Jerry Lee, Chicago, IL Illinois 60606-2016 (US)
(74) Representative: Sandri, Sandro

(56) References cited:
- WO-A1-00/73624
- GB-A- 1 361 426
- US-A1- 2009 145 912

## Description

### Field

This disclosure relates to the field of aircraft, and in particular, to mitigating the thermal effects of flight on the electronics onboard an aircraft.

### Background

Hypersonic flight is often characterized as flight through the atmosphere at speeds above Mach 5. At these speeds, aerodynamic heating of the leading surfaces of the aircraft become problematic. Aerodynamic heating is the heating of a body produced by the flow of a fluid (e.g., air) over the body.

In hypersonic flight, the speed of the air molecules impinging on the aircraft rapidly falls to zero near the leading edges of the aircraft. Heating of the leading surfaces occurs as the kinetic energy of the air molecules is converted into thermal energy. The thermal energy heats the leading surfaces, which can transfer heat to other portions of the aircraft (e.g., electronics onboard the aircraft). At hypersonic speeds, the temperature of the leading surfaces can exceed 1000 degrees Celsius. Considerable effort has been made in the last few decades attempting to solve problems associated with aerodynamic heating of hypersonic vehicles.

### Summary

One aspect comprises a thermal insulation system for an aircraft that includes at least one high temperature component and at least one temperature sensitive component. The thermal insulation system comprises a carrier having an interior surface that includes a first plurality of magnets that generate a first magnetic field, and an exterior surface that is thermally coupled to the at least one high temperature component. The thermal insulation system further comprises a container surrounded by the interior surface of the carrier that has an exterior surface including a second plurality of magnets that generate a second magnetic field oriented opposite the first magnetic field, and an interior surface that is thermally coupled to the at least one temperature sensitive component. The first magnetic field and the second magnetic field generate a gap between the interior surface of the carrier and the exterior surface of the container to reduce a heat transfer from the at least one high temperature component to the at least one temperature sensitive component.

Another aspect comprises a method of assembly of a thermal insulation system for an aircraft that includes a high temperature component and a temperature sensitive component. The method comprises coupling a first plurality of magnets to an interior surface of a carrier, where the first plurality of magnets generates a first magnetic field. The method further comprises thermally coupling the high temperature component to an exterior surface of the carrier. The method further comprises coupling a second plurality of magnets to an exterior surface of a container, where the second plurality of magnets generates a second magnetic field oriented opposite the first magnetic field. The method further comprises thermally coupling the temperature sensitive component to an interior surface of the container. The method further comprises positioning the container within an interior space of the carrier, where the interior space is defined by the interior surface of the carrier.

The above summary provides a basic understanding of some aspects of the specification. This summary is not an extensive overview of the specification. It is intended to neither identify key or critical elements of the specification nor delineate any scope particular embodiments of the specification, or any scope of the claims. Its sole purpose is to present some concepts of the specification in a simplified form as a prelude to the more detailed description that is presented later.

### Description of the Drawings

Some aspects are now described, by way of example only, and with reference to the accompanying drawings. The same reference number represents the same element or the same type of element on all drawings.
FIG. 1 illustrates an aircraft in an exemplary embodiment.
FIG. 2 illustrates a thermal insulation system in an exemplary embodiment.
FIG. 3 illustrates another view of the thermal insulation system of FIG. 2 in an exemplary embodiment.
FIG. 4 illustrates another view of the thermal insulation system of FIG. 2 in an exemplary embodiment.
FIG. 5 illustrates another view of the thermal insulation system of FIG. 2 in an exemplary embodiment.
FIG. 6 illustrates another aircraft in an exemplary embodiment.
FIG. 7 illustrates a cylindrical section of the aircraft of FIG. 6 in an exemplary embodiment.
FIG. 8 illustrates a portion of a collar and a portion of the cylindrical section of FIG. 7 in an exemplary embodiment.
FIG. 9 is a flow chart of a method of thermally isolating a high temperature component of an aircraft from a temperature sensitive component of the aircraft during operation of the aircraft in an exemplary embodiment.
FIG. 10 is a flow chart of a method of assembly of a thermal insulation system for an aircraft that includes a high temperature component and a temperature sensitive component in an exemplary embodiment.
FIG. 11 illustrates a carrier with magnets coupled to an interior surface in an exemplary embodiment.
FIG. 12 illustrates an exterior surface of a carrier that is thermally coupled to a high temperature component in an exemplary embodiment.
FIG. 13 illustrates a container with magnets coupled to an exterior surface of the container in an exemplary embodiment.
FIG. 14 illustrates a container positioned within an interior space of a carrier in an exemplary embodiment.
FIG. 15. illustrates a thermal insulation system that includes shock-absorbing stops in an exemplary embodiment.
FIG. 16 illustrates a thermal insulation system utilizing a cantilevered container in an exemplary embodiment.

### Description

The figures and the following description illustrate specific exemplary embodiments. It will thus be appreciated that those skilled in the art will be able to devise various arrangements that, although not explicitly described or shown herein, embody the principles of the embodiments and are included within the scope of the embodiments. Furthermore, any examples described herein are intended to aid in understanding the principles of the embodiments, and are to be construed as being without limitation to such specifically recited examples and conditions. As a result, the inventive concept(s) is not limited to the specific embodiments or examples described below, but by the claims and their equivalents.

Embodiments described herein provide thermal insulation for aircraft components using magnetic fields to generate a gap between the high temperature components (e.g., the leading surfaces of the aircraft) and the temperature sensitive components (e.g., the electronics onboard the aircraft) during flight, such as during flight at hypersonic speeds. The gap can reduce a heat transfer from the high temperature components to the temperature sensitive components.

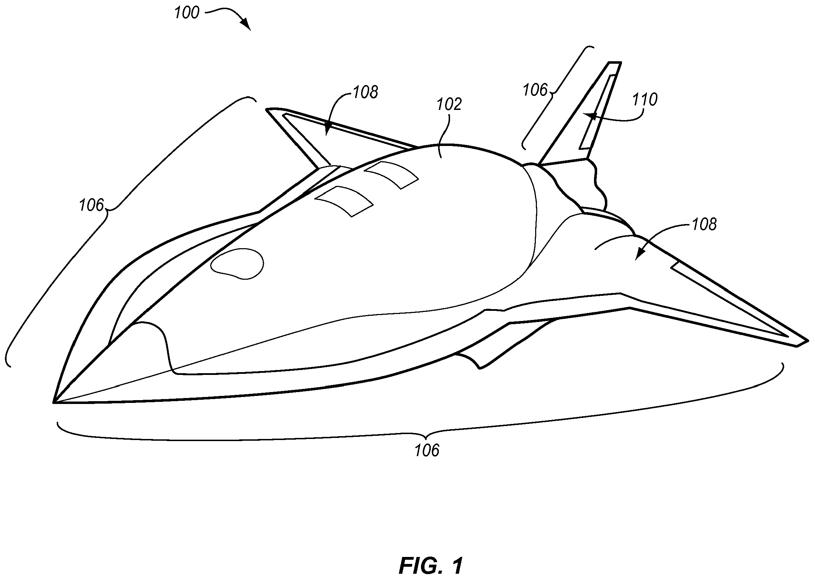

FIG. 1 illustrates an aircraft 100 in an exemplary embodiment. Aircraft 100 may be operated manned or unmanned as desired. Aircraft 100 is just one configuration of an aircraft capable of flight at hypersonic speed, and other configurations, not shown, may be implemented as desired. For example, aircraft 100 may have a different shape, size, aspect ratio, etc., as desired. Thus, aircraft 100 is merely shown in a particular configuration for purposes of discussion.

In this embodiment, aircraft 100 includes at least one high temperature component 106 (e.g., a leading surface, a jet engine component, a rocket component, a thermal battery component, etc.). For instance, some of the leading surfaces are located on a wing 108 of aircraft 100, and some of the leading surfaces are located on a tail 110 of aircraft 100. During operation of aircraft 100 in hypersonic flight (e.g., aircraft 100 moves at hypersonic speeds of Mach 5 and above), the leading surfaces are impinged by air molecules moving at high speed, which heats the leading surfaces. Accordingly, the heated leading surfaces at high speeds can be considered high temperature components 106. The temperature of the leading surfaces can exceed 1000 degrees Celsius, which can heat components within aircraft 100 that may be sensitive to high temperatures. For instance, at such high temperatures, heat may be rapidly transferred from the leading surfaces into the interior of aircraft 100, adversely impacting electronic systems within aircraft 100 (e.g., flight electronics, control systems, etc.).

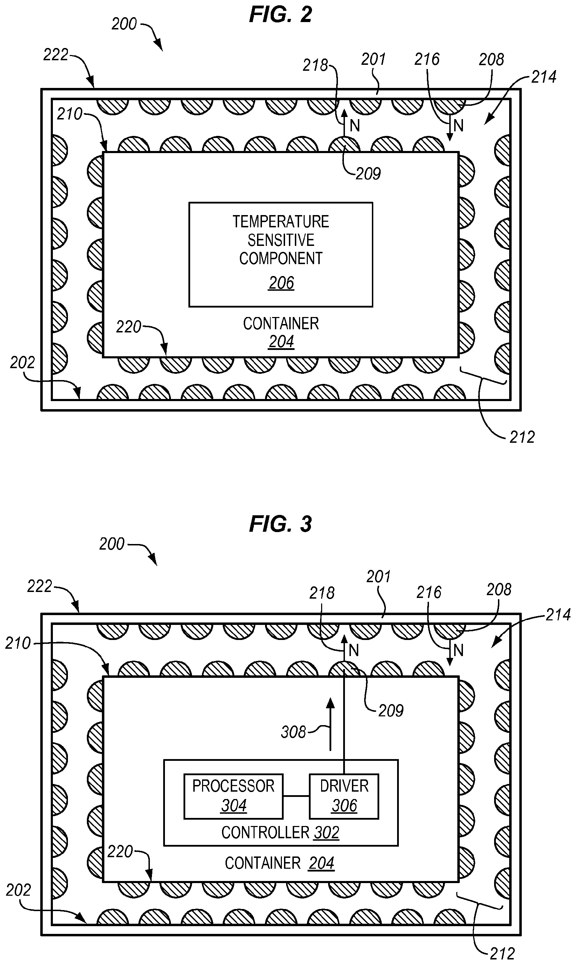

FIG. 2 illustrates a thermal insulation system 200 for use with aircraft 100 in an exemplary embodiment. Thermal insulation system 200 may be used to provide thermal insulation between at least one high temperature component 106 and at least one temperature sensitive component 206 (e.g., electronics on aircraft 100). Thermal insulation system 200 includes a carrier 201 that surrounds a container 204. Carrier 201 and/or container 204 may be formed from a magnetically permeable material or may comprise steel with a magnetically permeable cladding in some embodiments. One example of a magnetically permeable material is a nickel-iron soft magnetic alloy, such as MuMETAL®. An exterior surface 222 of carrier 201 is thermally coupled to high temperature component 106. Carrier 201 has an interior space 214 that is defined by an interior surface 202 of carrier 201. Container 204 includes temperature sensitive component 206 (e.g., electronics) for aircraft 100 that is thermally coupled to an interior surface 220 of container 204. Some examples of temperature sensitive component 206 for aircraft 100 include power supplies, processors, memory devices, accelerometers, Radio Frequency (RF) transmitters, RF receivers, inertial sensors, etc.

In the exemplary embodiment, a first plurality of magnets 208 are embedded within, and/or are located on a surface of, interior surface 202. Magnets 208 generate a first magnetic field 216 that is oriented in a direction indicated by an arrow toward container 204.

Further, in the exemplary embodiment, a second plurality of magnets 209 are embedded within, and/or are located on a surface of, an exterior surface 210 of container 204. Magnets 209 generate a second magnetic field 218 that is oriented in a direction indicated by an arrow toward interior surface 202 of carrier 201.

The magnetic fields of magnets 208-209 are configured to be in opposition to each other. For instance, the magnetic field orientation of magnets 208 are configured to be opposite the magnetic field orientation of magnets 209. Due to the opposing magnetic fields, container 204 is separated away from interior surface 202 of carrier 201, and may be centered within interior space 214 of carrier 201. This separation forms a gap 212 between interior surface 202 of carrier and exterior surface 210 of container 204. Magnets 208-209 may include permanent magnets or electromagnets, or some combination of permanent magnets and electromagnets as desired. Some examples of materials that may be used to form magnets 208-209 include heusler alloys formed from Co, Fe, Cu, Zr, sintered alloys of Co, Fe, Cu, Zr, NdFeB, SmCo, Alnico, etc. At higher field strengths, magnets 208-209 may include rounded corners to avoid extreme B field enhancements.

The wall materials used for carrier 201 and/or container 204 may be formed from lower magnetic permeability materials such as steel. The walls may also be formed from higher magnetic permeability materials such as iron, nickel, cobalt, and alloys.

During flight, such as hypersonic flight, temperatures of high temperature component 106 of aircraft 100 (see FIG. 1) increase and may transfer heat into carrier 201. Gap 212 formed due to magnetic repulsion between magnets 208-209 prevents container 204 from directly contacting carrier 201. Accordingly, gap 212 reduces the heat transfer between carrier 201 and container 204, which in turn, reduces the heat transfer between carrier 201 and temperature sensitive component 206. In some embodiments, exterior surface 210 of container 204 may include an infrared (IR) reflective coating and/or low emissivity paint that is configured to reduce the heat transfer from carrier 201 to container 204 due to radiative heat transfer. In other embodiments, gap 212 may be under vacuum to reduce the heat transfer between carrier 201 and container 204 due to convective heat transfer. Accordingly, a vacuum line may be coupled to the interior space 214 of the carrier 201, and a vacuum source may be coupled to the vacuum line.

In some embodiments, a coolant may flow within gap 212 such that the coolant removes heat from container 204. The coolant may be a gas or a liquid as desired. For instance, the coolant may be a fuel for aircraft 100 that flows past container 204 through gap 212. Accordingly, a coolant line may be coupled to the interior space 214 of the carrier 201, and a coolant source may be coupled to the coolant line. In some embodiments, a fuel source for the aircraft 100 may be coupled to the coolant line.

FIG. 3 illustrates another view of thermal insulation system 200 in an exemplary embodiment. In this embodiment, magnets 209 along exterior surface 210 of container 204 are electromagnets. A controller 302 within container 204 is capable of generating an excitation current 308 that is used to generate and/or vary the magnetic field strength of magnets 209. During flight, controller 302 may provide excitation current 308 to magnets 209 to generate gap 212 between interior surface 202 of carrier 201 and exterior surface 210 of container 204.

In some embodiments, controller 302 may monitor gap 212 and adjust excitation current 308 to adjust gap 212. During flight of aircraft 100, turbulence may cause gap 212 to vary in magnitude as a motion is introduced between carrier 201 and container 204. Over time, these motions or variations of gap 212 may cause heating of container 204 due to the time varying magnetic fields induced upon container 204. Controller 302 is able to monitor the changes in gap 212, and to vary excitation current 308 to dampen or reduce the variations in gap 212, which in turn reduces the heating that may be imposed upon container 204 due to magnetic eddy currents.

While the specific hardware implementation of controller 302 is subject to design choices, one particular embodiment includes one or more processors 304 coupled with a current driver 306. Processor 304 includes any electronic circuits and/or optical circuits that are able to perform the functions described herein. For example, processor 304 may perform any functionality described herein for controller 302. Processor 304 may include one or more Central Processing Units (CPU), microprocessors, Digital Signal Processors (DSPs), Application-specific Integrated Circuits (ASICs), Programmable Logic Devices (PLD), control circuitry, etc. Some examples of processors include INTEL® CORE™ processors, Advanced Reduced Instruction Set Computing (RISC) Machines (ARM®) processors, etc.

Current driver 306 includes any electronic circuits, and/or optical circuits, and/or power electronic circuits that are able to generate and/or vary excitation current 308. For instance, current driver 306 may include solid state power relays, switched-contact power relays, transistors, Metal Oxide Field Effect Transistors (MOSFETS), Field Effect Transistors (FETS), etc., used to generate and/or vary excitation current 308.

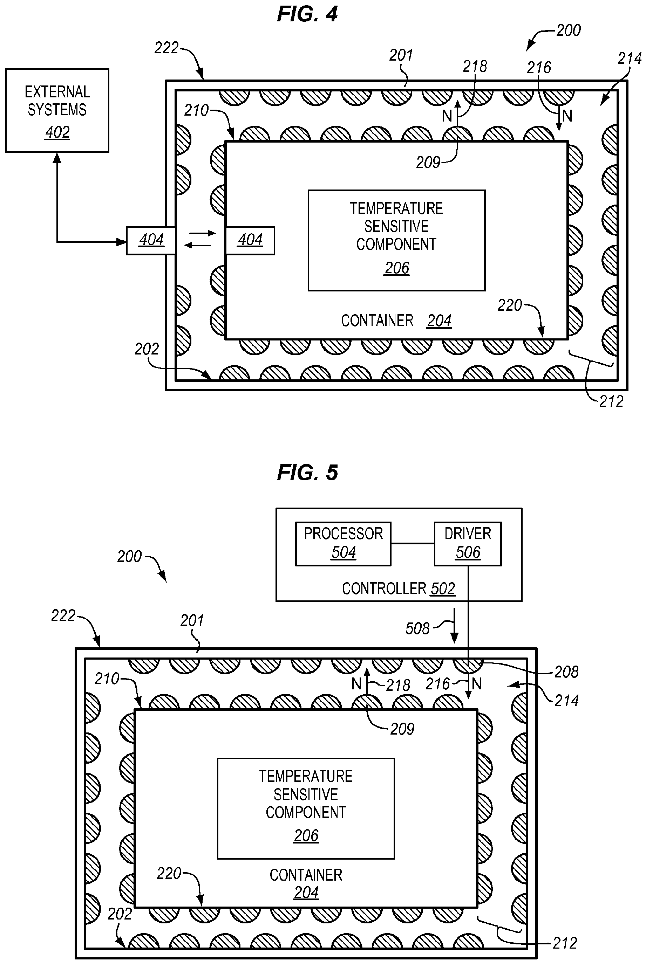

FIG. 4 illustrates another view of thermal insulation system 200 in an exemplary embodiment. As shown in FIG. 4, temperature sensitive component 206 is capable of communicating with external systems 402 (e.g., electronic systems outside of container 204) utilizing one or more transceivers 404. Transceivers 404 may include RF transmitter/receiver pairs, optical transmitter/receiver pairs, fiber optic bundles, small gauge copper wires, quartz fibers, etc., which allow for non-contact or thermally non-conductive communications between temperature sensitive component 206 and external systems 402. Non-contact or thermally non-conductive communications are desired for reducing the heat transfer from carrier 201 to container 204 and ultimately, for reducing the heat transfer from carrier 201 to temperature sensitive component 206.

FIG. 5 illustrates another view of thermal insulation system 200 in an exemplary embodiment. As shown in FIG. 5, magnets 208 along interior surface 202 of carrier 201 are electromagnets. A controller 502 is capable of generating an excitation current 508 that is used to generate and/or vary the magnetic field strength of magnets 208. During flight, controller 502 may provide excitation current 508 to magnets 208 to generate gap 212 between interior surface 202 of carrier 201 and exterior surface 210 of container 204.

In some embodiments, controller 502 may monitor gap 212 and adjust excitation current 508 to adjust gap 212 in a manner previously described for controller 302. In embodiments where both controller 302 and controller 502 are included in thermal insulation system 200, coordination may occur between controller 302 and controller 502 to initiate gap 212 and/or vary gap 212 during flight. This coordination may be possible using transceivers 404 illustrated and previously discussed with respect to FIG. 4. In embodiments where only controller 302 is present, then magnets 208 may comprise permanent magnets, while magnets 209 comprise electromagnets. In embodiments where only controller 502 is present, then magnets 209 may comprise permanent magnets, while magnets 208 comprise electromagnets.

While the specific hardware implementation of controller 502 is subject to design choices, one particular embodiment includes one or more processors 504 coupled with a current driver 506. Processor 504 may include hardware embodiments previously described for processor 304, and current driver 506 may include hardware embodiments previously described for current driver 306.

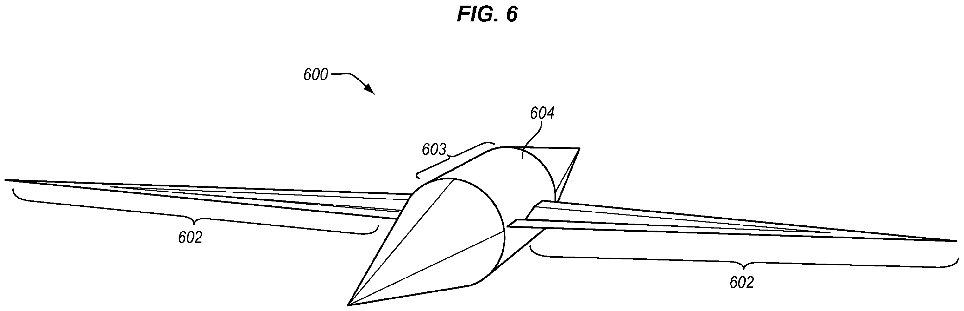

FIG. 6 illustrates another aircraft 600 in an exemplary embodiment. In some embodiments, aircraft 600 may be configured for hypersonic flight (e.g., aircraft 600 may be configured to fly at hypersonic speeds of Mach 5 and above). Aircraft 600 is just one configuration of an aircraft, and other configurations, not shown, may be implemented as desired. For example, aircraft 600 may have a different shape, size, aspect ratio, etc., as desired. Thus, aircraft 600 is merely shown in a particular configuration for purposes of discussion. In this embodiment, aircraft 600 includes high temperature component 602 (e.g., leading surfaces), which are located along an outer surface 603 of a collar 604.

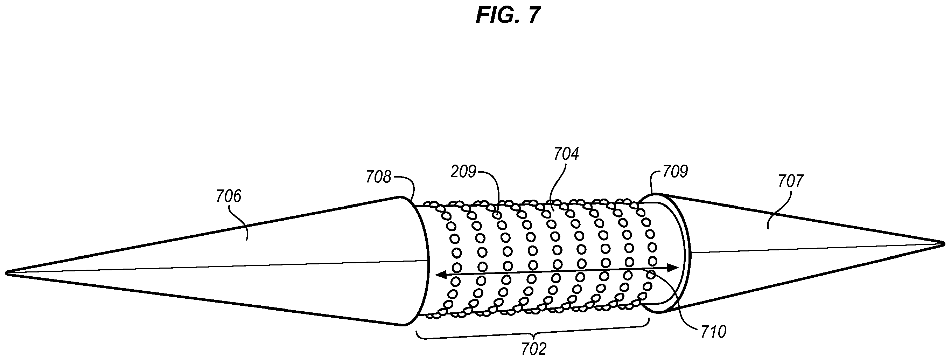

FIG. 7 illustrates a portion of aircraft 600 including a cylindrical section 702. In this view, magnets 209 are located on an outer surface 704 of cylindrical section 702. FIG. 7 also illustrates cones 706-707, which are coupled to cylindrical section 702. Cone 706 is coupled to end 708 of cylindrical section 702, and cone 707 is coupled to end 709 of cylindrical section 702. Where cones 706-707 and ends 708-709 meet, features are formed to prevent collar 604 from translating axially between ends 708-709 of cylindrical section 702 along a long axis 710 of cylindrical section 702. In this embodiment, collar 604 is free to rotate with respect to cylindrical section 702.

In this embodiment, collar 604 circumscribes cylindrical section 702 of aircraft 600. In some embodiments, outer surface 704 of cylindrical section 702 may include an IR reflective coating configured to reduce the heat transfer from collar 604 to cylindrical section 702 due to radiative heat transfer.

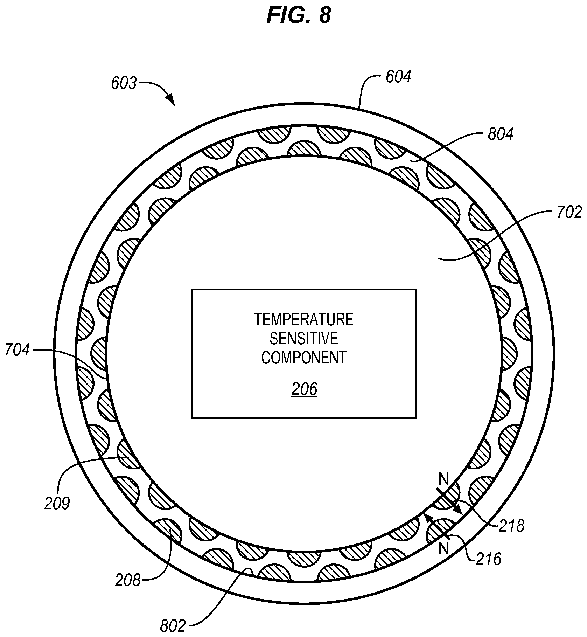

FIG. 8 illustrates a portion of collar 604 and a portion of a cylindrical section 702 of aircraft 600. In this view, collar 604 circumscribes cylindrical section 702. In particular, an inner surface 802 of collar 604 faces outer surface 704 of cylindrical section 702. Collar 604 includes a plurality and/or an array of magnets 208. Cylindrical section 702 also includes a plurality and/or an array of magnets 209. Magnets 208-209 have opposing magnetic fields that generate a gap 804 between collar 604 and cylindrical section 702.

During flight, temperatures of high temperature components 602 (e.g., leading surfaces) of aircraft 600 (see FIG. 6) increase and high temperature components may transfer heat to collar 604. If collar 604 were in thermal contact with cylindrical section 702, then heat transfer would occur from high temperature components 602 into cylindrical section 702 via collar 604. However, gap 804 formed due to the magnetic repulsion between magnets 208-209 prevents collar 604 from contacting cylindrical section 702 of aircraft 600. Accordingly, gap 804 reduces the heat transfer between collar 604 and cylindrical section 702, which in turn, reduces the heat transfer between collar 604 and temperature sensitive component 206 that are contained within cylindrical section 702. In some embodiments, controller 302 and/or controller 502 may monitor gap 804 as previously described above for FIG. 3 and FIG. 5. For instance, with controller 302 modifying excitation current 308 applied to magnets 209, and/or with controller 502 modifying excitation current 508 applied to magnets 208. Therefore, any of the previously described functionality for controller 302 and/or controller 502 may apply for controlling gap 804 in aircraft 600.

Using the magnetic spacing generated between the high temperature components and the temperature sensitive components onboard an aircraft, aerodynamic heating can be reduced or eliminated, especially during hypersonic flight of the aircraft.

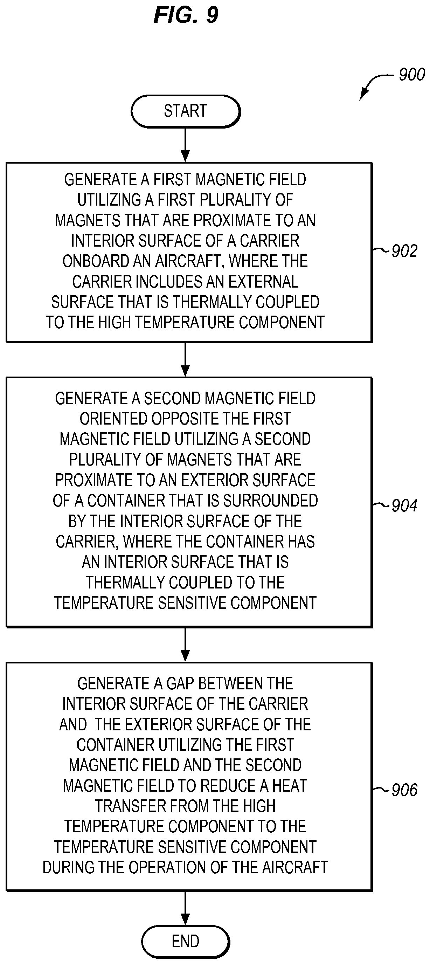

FIG. 9 is a flow chart of a method 900 of thermally isolating a high temperature component of an aircraft from a temperature sensitive component of the aircraft during operation of the aircraft in an exemplary embodiment. Method 900 will be described with respect to thermal insulation system 200, although method 900 may be performed by other systems, not shown. The steps of the methods described herein may include other steps, not shown. Also, the steps may be performed an alternate order.

Referring to FIG. 2, magnets 208 that are proximate to interior surface 202 of carrier 201 generate a magnetic field 216 (see step 902). Magnets 209 on container 204 also generate a magnetic field 218. Magnetic field 218 is oriented opposite of magnetic field 216 (see step 904). Magnets 208-209 may comprise permanent magnets, electromagnets, or combinations of permanent magnets and electromagnets. Since magnetic field 216 and magnetic field 218 oppose each other, a repulsive force is generated between carrier 201 and container 204, forming gap 212 (see step 906). Gap 212 separates container 204 from carrier 201 and provides a thermal barrier between container 204 and carrier 201. As high temperature component 106 is thermally coupled to exterior surface 222 of carrier 201, and temperature sensitive component 206 is thermally coupled in interior surface 220 of container 204, the heat transfer from high temperature component 106 to temperature sensitive component 206 is reduced utilizing gap 212.

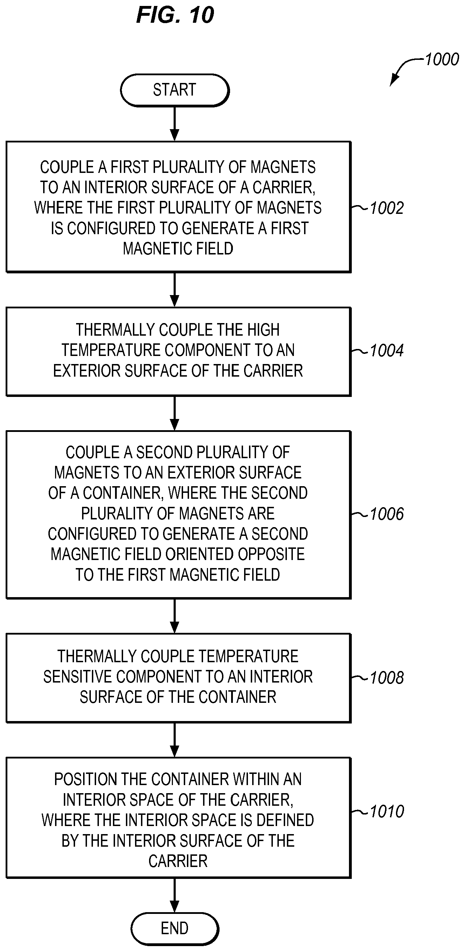

FIG. 10 is a flow chart of a method 1000 of assembly of a thermal insulation system for an aircraft that includes a high temperature component and a temperature sensitive component in an exemplary embodiment. Method 1000 will be described with respect to thermal insulation system 200, although method 1000 may apply to other thermal insulation systems, not shown.

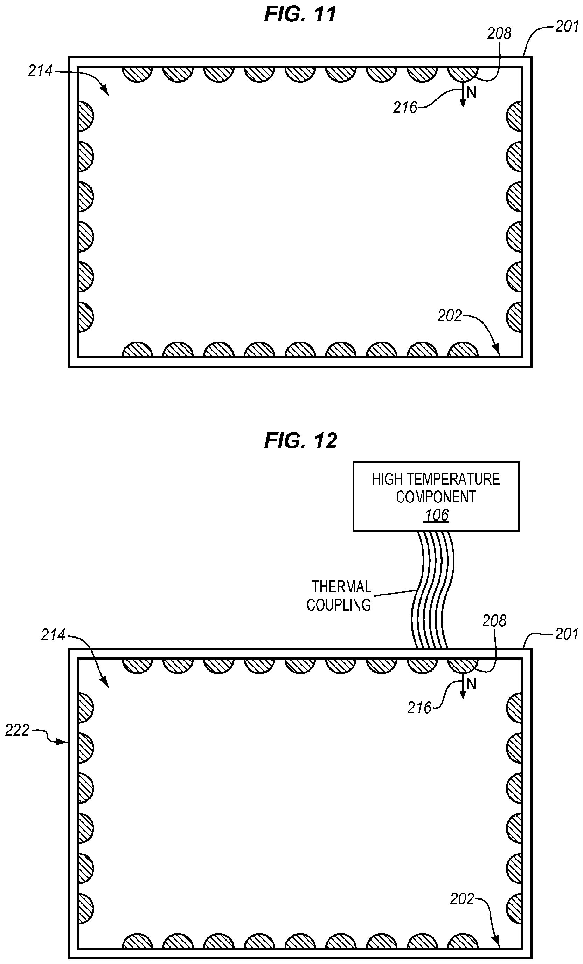

During the assembly process of thermal insulation system 200, magnets 208 are coupled to interior surface 202 of carrier 201 (see step 1002). Magnets 208 are coupled in such a way that they exhibit the same magnetic field orientation (e.g., magnetic field 216, which has a north pole that points into interior space 214 of carrier 201). Magnets 208 may be bonded to interior surface 202 (e.g., using an adhesive), affixed using a fastener, and/or be formed partially or completely within interior surface 202 of carrier 201. FIG. 11 illustrates carrier 201 with magnets 208 coupled to interior surface 202 in an exemplary embodiment.

Exterior surface 222 of carrier 201 is thermally coupled to high temperature component 106 (see step 1004). For example, exterior surface 222 may be thermally coupled to leading edges of airframe 102, to engine housings, or other high temperature features on aircraft 100 using any number of thermally conductive materials as desired. FIG. 12 illustrates exterior surface 222 of carrier 201 thermally coupled to high temperature component 106 in an exemplary embodiment.

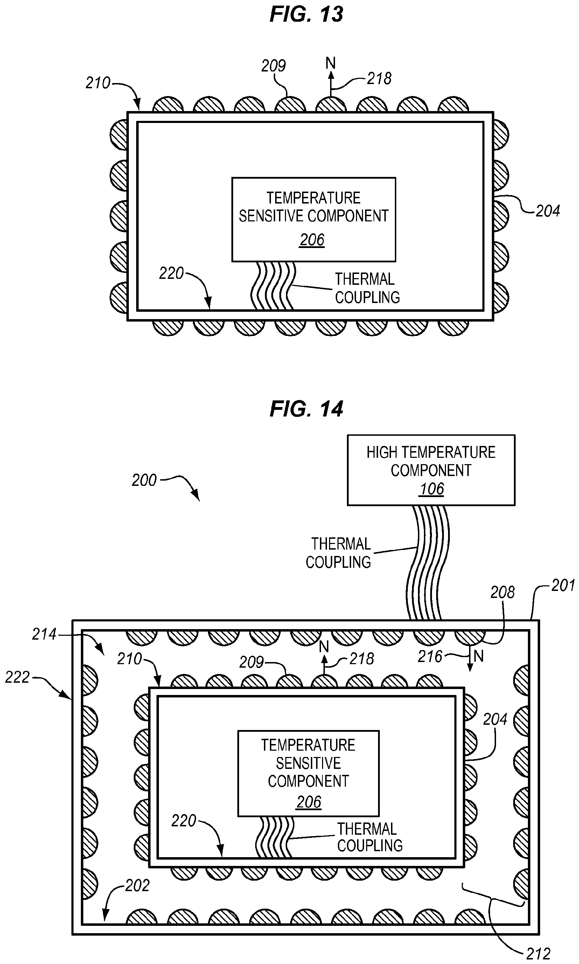

Magnets 209 are coupled to exterior surface 210 of container 204 (see step 1006). Magnets 209 are coupled in such a way that they exhibit the same magnetic field orientation (e.g., magnetic field 218). Magnets 209 may be bonded to exterior surface 210 (e.g., using an adhesive), affixed using a fastener, and/or be formed partially or completely within exterior surface 210 of container 204. FIG. 13 illustrates container 204 with magnets 209 coupled to exterior surface 210 of container 204 in an exemplary embodiment.

Interior surface 220 of container 204 is thermally coupled to temperature sensitive component 206 (see step 1008). For example, interior surface 220 of container 204 may be thermally coupled to electronics, sensors, power supplies, or other temperature sensitive features on aircraft 100 using any number of thermally conductive materials as desired. FIG. 13 illustrates interior surface 220 of container 204 thermally coupled to temperature sensitive component 206 in an exemplary embodiment.

Container 204 is positioned within interior space 214 of carrier 201, where interior space 214 is defined by interior surface 202 of carrier 201 (see step 1010). FIG. 14 illustrates container 204 positioned within interior space 214 of carrier 201 in an exemplary embodiment.

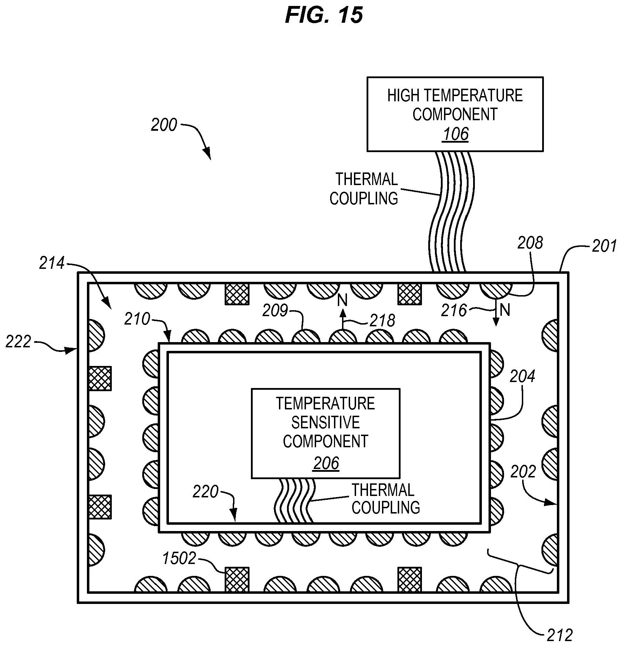

FIG. 15 illustrates thermal insulation system 200 including shock-absorbing stops 1502 in an exemplary embodiment. Although shock-absorbing stops 1502 have been illustrated as being located on interior surface 202 of carrier 201, shock-absorbing stops 1502 may alternatively or additionally be located on exterior surface 210 of container 204. In this embodiment, shock-absorbing stops 1502 are used to prevent carrier 201 from contacting container 204 in cases where the repulsive force generated by magnets 208-209 is temporarily overcome (e.g., due to high acceleration events). Shock-absorbing stops 1502 may be used to prevent damage that may occur to thermal insulation system 200 under these extreme circumstances. Shock-absorbing stops 1502 may be formed from high temperature shock-absorbing materials. Some examples of high temperature shock-absorbing materials include silicone, fluorosilicone, fluorocarbon, high density polyethylene, perfluoroelastomeric compounds, etc. In some embodiments, interior surface 202 of carrier 201 and/or exterior surface 210 of container 204 may be configured to convert the relative movement of carrier 201 and container 204 into an electric current (e.g., using loops of conductive wires embedded within carrier 201 and/or container 204). The electric current harvested from the relative movement may be utilized to power small sensors or electronic components (e.g., small power loads of temperature sensitive component 206). In addition to the generation of current, the loops may provide vibration dampening.

Carrier 201 and/or container 204 may include thermoelectric coolers in some embodiments. For example, exterior surface 210 of container 204 may include the hot side of a thermoelectric cooler, with the cold side located along interior surface 220 of container 204. An electric current (e.g., the harvested electric current) may be used by the thermoelectric cooler to cool the interior of container 204, while radiating the heat into interior space 214 of carrier 201.

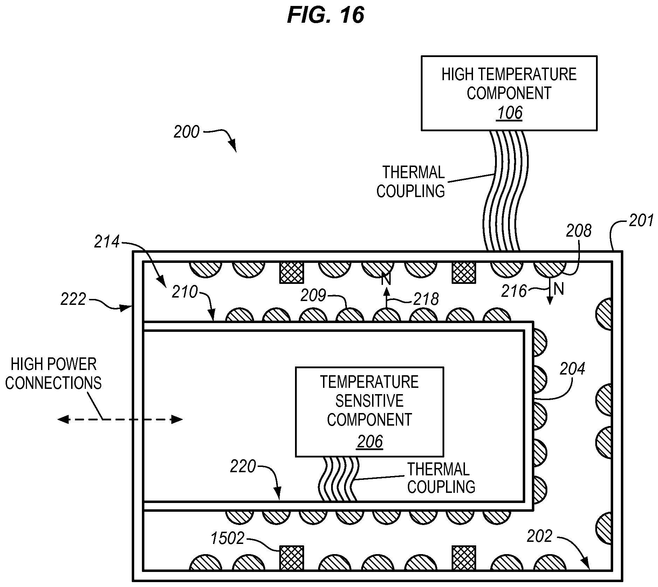

FIG. 16 illustrates thermal insulation system 200 utilizing a cantilevered container 204 in an exemplary embodiment. In some cases, it may be desirable to cool container 204 by allowing container 204 to directly contact a fuel, while ensuring that high power connections can traverse from carrier 201 into container 204. For instance, carrier 201 may comprise a fuel tank for aircraft 100, while temperature sensitive component 206 may comprises a high-power microwave amplifier for a RAdio Detection and Ranging (RADAR) system. Cantilevering container 204 into a fuel tank allows container 204 to be surrounded by fuel, which cools container 204. Yet, the motion of container 204 can be controlled using magnetic field 216 and magnetic field 218, as previously described. In some embodiments, container 204 may comprise a heat exchanger. When a heat exchanger is placed within a fuel tank to utilize the fuel as a coolant, the typical placement of the heat exchanger is at the bottom of the fuel tank. When container 204 comprises a heat exchanger, additional options are available for the placement of the heat exchanger within the fuel tank (e.g., on the sides or top of the fuel tank).

Any of the various elements shown in the figures or described herein may be implemented as hardware, software, firmware, or some combination of these. For example, an element may be implemented as dedicated hardware. Dedicated hardware elements may be referred to as "processors", "controllers", or some similar terminology. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, a network processor, application specific integrated circuit (ASIC) or other circuitry, field programmable gate array (FPGA), read only memory (ROM) for storing software, random access memory (RAM), non-volatile storage, logic, or some other physical hardware component or module.

Also, an element may be implemented as instructions executable by a processor or a computer to perform the functions of the element. Some examples of instructions are software, program code, and firmware. The instructions are operational when executed by the processor to direct the processor to perform the functions of the element. The instructions may be stored on storage devices that are readable by the processor. Some examples of the storage devices are digital or solid-state memories, magnetic storage media such as a magnetic disks and magnetic tapes, hard drives, or optically readable digital data storage media.

Although specific embodiments were described herein, the scope is not limited to those specific embodiments. Rather, the scope is defined by the following claims.

## Claims

1. A method (1000) of assembling a thermal insulation system (200) of an aircraft (100, 600) the aircraft (100, 600) comprising an aircraft high temperature component (106, 602) and an aircraft temperature sensitive component (206), the method comprising:
coupling (1002) a first plurality of magnets (208) to an interior surface (202) of a carrier (201), the first plurality of magnets (208) configured to generate a first magnetic field (216);
thermally coupling (1004) the aircraft high temperature component (106, 602) to an exterior surface (222) of the carrier (201);
coupling (1006) a second plurality of magnets (209) to an exterior surface (210) of a container (204), the second plurality of magnets (209) configured to generate a second magnetic field (218) oriented opposite to the first magnetic field (216);
thermally coupling (1008) the aircraft temperature sensitive component (206) to an interior surface (220) of the container (204); and
positioning (1010) the container (204) within an interior space (214) of the carrier (201), the interior space (214) defined by the interior surface (202) of the carrier (201).

2. The method (1000) of claim 1, wherein coupling (1002) the first plurality of magnets (208) comprises:
coupling a first plurality of electromagnets to the interior surface (202) of the carrier (201); and
electrically coupling the first plurality of electromagnets to a current source that is configured to apply an excitation current (508) to generate the first magnetic field (216).

3. The method (1000) of claim 1 or 2, wherein coupling (1006) the second plurality of magnets (209) comprises:
coupling a second plurality of electromagnets to the exterior surface (210) of the container (204); and
electrically coupling the second plurality of electromagnets to a current source that is configured to apply an excitation current (308) to generate the second magnetic field (218).

4. The method (1000) of any one of claims 1 to 3, further comprising:
applying an Infrared reflective coating to the exterior surface (210) of the container (204).

5. The method (1000) of any one of claims 1 to 4, further comprising:
applying an Infrared reflective coating to the interior surface (202) of the carrier (201).

6. The method (1000) of any one of claims 1 to 5, wherein thermally coupling (1004) the aircraft high temperature component (106, 602) to the exterior surface (222) of the carrier (201) comprises:
thermally coupling a leading surface of the aircraft (100, 600) to the exterior surface of the carrier (201).

7. The method (1000) of any one of claims 1 to 6, wherein thermally coupling (1008) the aircraft temperature sensitive component (206) to the interior surface (220) of the container (204) comprises:
thermally coupling flight electronics of the aircraft (100, 600) to the interior surface of the container (204).

8. The method (1000) of any one of claims 1 to 7, further comprising:
coupling a vacuum line to the interior space (214) of the carrier (201); and
coupling a vacuum source to the vacuum line.

9. The method (1000) of any one of claims 1 to 8, further comprising:
coupling a coolant line to the interior space (214) of the carrier (201); and
coupling a coolant source to the coolant line.

10. The method (1000) of claim 9, further comprising coupling a fuel source of the aircraft (100, 600) to the coolandt line.

11. A thermal insulation system (200) for an aircraft (100, 600), the aircraft (100, 600) comprising at least one aircraft high temperature component (106, 602) and at least one aircraft temperature sensitive component (206), the thermal insulation system of the aircraft (100, 600) comprising:
a carrier (201) having an interior surface (202) that comprises a first plurality of magnets (208) configured to generate a first magnetic field (216), the carrier (201) having an exterior surface (222) configured to be thermally coupled to the at least one aircraft high temperature component (106, 602); and
a container (204) surrounded by the interior surface of the carrier (201), the container (204) having an exterior surface (210) that comprises a second plurality of magnets (209) configured to generate a second magnetic field (218), oriented opposite the first magnetic field (216), the container also having an interior surface (220), configured to be thermally coupled to the at least one aircraft temperature sensitive component (206),
wherein the first magnetic field (216) and the second magnetic field (218) are configured to generate a gap (212) between the interior surface of the carrier (201) and the exterior surface of the container (204) to, in use, reduce a heat transfer from the at least one aircraft high temperature component (106, 602) to the at least one aircraft temperature sensitive component (206) during operation of the aircraft.

12. The thermal insulation system (200) of claim 11, wherein:
the first plurality of magnets (208) comprises electromagnets; and
the thermal insulation system further comprises:
a controller (502) that is configured to apply an excitation current (508) to the first plurality of magnets (208) to generate the first magnetic field (216).

13. The thermal insulation system (200) of claim 12, wherein:
the controller (502) is configured to monitor variations in the gap (212) between the exterior surface (210) of the container (204) and the interior surface (202) of the carrier (201), and to vary the excitation current (508) applied to the first plurality of magnets (208) to reduce the variations in the gap (212).

14. The thermal insulation system (200) of any one of claims 11 to 13, wherein:
the second plurality of magnets (209) comprises electromagnets; and
the thermal insulation system (200) further comprises:
a controller (302) that is configured to apply an excitation current (308) to the second plurality of magnets (209) to generate the second magnetic field (218).

15. The thermal insulation system (200) of claim 14, wherein:
the controller (302) is configured to monitor variations in the gap (212) between the exterior surface (210) of the container (204) and the interior surface (202) of the carrier (201) and to vary the excitation current (308), applied to the second plurality of magnets (209) to reduce the variations in the gap (212).

## Patentansprüche

1. Verfahren (1000) zum Montieren eines Wärmedämmungssystems (200) eines Luftfahrzeugs (100, 600), wobei das Luftfahrzeug (100, 600) eine Luftfahrzeughochtemperatur-Komponente (106, 602) und eine Luftfahrzeugtemperatur-empfindliche Komponente (206) aufweist, wobei das Verfahren aufweist:
Koppeln (1002) einer ersten Vielzahl von Magneten (208) an eine Innenfläche (202) eines Trägers (201), wobei die erste Vielzahl von Magneten (208) eingerichtet ist, ein erstes magnetisches Feld (216) zu erzeugen;
Wärmekoppeln (1004) der Luftfahrzeughochtemperatur-Komponente (106, 602) an eine Außenfläche (222) des Trägers (201);
Koppeln (1006) einer zweiten Vielzahl von Magneten (209) an eine Außenfläche (210) eines Behälters (204), wobei die zweite Vielzahl von Magneten (209) eingerichtet ist, ein zweites magnetisches Feld (218) zu erzeugen, das entgegengesetzt zum ersten magnetischen Feld (216) ausgerichtet ist;
Wärmekoppeln (1008) der Luftfahrzeugtemperatur-empfindlichen Komponente (206) an eine Innenfläche (220) des Behälters (204); und
Positionieren (1010) des Behälters (204) innerhalb eines Innenraums (214) des Trägers (201), wobei der Innenraum (214) durch die Innenfläche (202) des Trägers (201) definiert ist.

2. Verfahren (1000) nach Anspruch 1, wobei ein Koppeln (1002) der ersten Vielzahl von Magneten (208) aufweist:
Koppeln einer ersten Vielzahl von Elektromagneten an die Innenfläche (202) des Trägers (201); und
elektrisches Koppeln der ersten Vielzahl von Elektromagneten an eine Stromquelle, die eingerichtet ist, einen Erregerstrom (508) anzulegen, um das erste magnetische Feld (216) zu erzeugen.

3. Verfahren (1000) nach Anspruch 1 oder 2, wobei ein Koppeln (1006) der zweiten Vielzahl von Magneten (209) aufweist:
Koppeln einer zweiten Vielzahl von Elektromagneten an die Außenfläche (210) des Behälters (204); und
elektrisches Koppeln der zweiten Vielzahl von Elektromagneten an eine Stromquelle, die eingerichtet ist, einen Erregerstrom (308) anzulegen, um das zweite magnetische Feld (218) zu erzeugen.

4. Verfahren (1000) nach einem der Ansprüche 1 bis 3, das ferner aufweist:
Aufbringen einer Infrarot-reflektierenden Beschichtung auf die Außenfläche (210) des Behälters (204).

5. Verfahren (1000) nach einem der Ansprüche 1 bis 4, das ferner aufweist:
Aufbringen einer Infrarot-reflektierenden Beschichtung auf die Innenfläche (202) des Trägers (201).

6. Verfahren (1000) nach einem der Ansprüche 1 bis 5, wobei ein Wärmekoppeln (1004) der Luftfahrzeughochtemperatur-Komponente (106, 602) an die Außenfläche (222) des Trägers (201) aufweist:
Wärmekoppeln einer vorderen Fläche des Luftfahrzeugs (100, 600) an die Außenfläche des Trägers (201).

7. Verfahren (1000) nach einem der Ansprüche 1 bis 6, wobei ein Wärmekoppeln (1008) der Luftfahrzeugtemperatur-empfindlichen Komponente (206) an die Innenfläche (220) des Behälters (204) aufweist:
Wärmekoppeln einer Flugelektronik des Luftfahrzeugs (100, 600) an die Innenfläche des Behälters (204).

8. Verfahren (1000) nach einem der Ansprüche 1 bis 7, das ferner aufweist:
Koppeln einer Vakuumsleitung an den Innenraum (214) des Trägers (201); und
Koppeln einer Vakuumsquelle an die Vakuumsleitung.

9. Verfahren (1000) nach einem der Ansprüche 1 bis 8, das ferner aufweist:
Koppeln einer Kühlleitung an den Innenraum (214) des Trägers (201); und
Koppeln einer Kühlquelle an die Kühlleitung.

10. Verfahren (1000) nach Anspruch 9, das ferner ein Koppeln einer Treibstoffquelle des Luftfahrzeugs (100, 600) an die Kühlleitung aufweist.

11. Wärmedämmungssystem (200) für ein Luftfahrzeug (100, 600), wobei das Luftfahrzeug (100, 600) zumindest eine Luftfahrzeughochtemperatur-Komponente (106, 602) und zumindest eine Luftfahrzeugtemperatur-empfindliche Komponente (206) aufweist, wobei das Wärmedämmungssystem des Luftfahrzeugs (100, 600) aufweist:
einen Träger (201) mit einer Innenfläche (202), der eine erste Vielzahl von Magneten (208) aufweist, die eingerichtet ist, ein erstes magnetisches Feld (216) zu erzeugen, wobei der Träger (201) eine Außenfläche (222) aufweist, die eingerichtet ist, wärmemäßig an die zumindest eine Luftfahrzeughochtemperatur-Komponente (106, 602) gekoppelt zu werden; und
einen Behälter (204), der von der Innenfläche des Trägers (201) umgeben ist, wobei der Behälter (204) eine Außenfläche (210) aufweist und eine zweite Vielzahl von Magneten (209) aufweist, die eingerichtet ist, ein zweites Magnetfeld (218) zu erzeugen, das entgegengesetzt zum ersten Magnetfeld (216) ausgerichtet ist, wobei der Behälter auch eine Innenfläche (220) aufweist, die eingerichtet ist, wärmemäßig an die zumindest eine Luftfahrzeugtemperatur-empfindliche Komponente (206) gekoppelt zu werden,
wobei das erste Magnetfeld (216) und das zweite Magnetfeld (218) eingerichtet sind, einen Unterschied (212) zwischen der Innenfläche des Trägers (201) und der Außenfläche des Behälters (204) zu erzeugen, um bei Verwendung einen Wärmeübertrag von der zumindest einen Luftfahrzeughochtemperatur-Komponente (106, 602) an die zumindest eine Luftfahrzeugtemperatur-empfindliche Komponente (206) während eines Betriebs des Luftfahrzeugs zu verringern.

12. Wärmedämmungssystem (200) nach Anspruch 11, wobei:
die erste Vielzahl von Magneten (208) Elektromagneten aufweist; und
das Wärmedämmungssystem ferner aufweist:
einen Controller (502), der eingerichtet ist, einen Erregerstrom (508) an die erste Vielzahl von Magneten (208) anzulegen, um das erste magnetische Feld (216) zu erzeugen.

13. Wärmedämmungssystem (200) nach Anspruch 12, wobei:
der Controller (502) eingerichtet ist, Änderungen des Unterschieds (212) zwischen der Außenfläche (210) des Behälters (204) und der Innenfläche (202) des Trägers (201) zu überwachen und den Erregerstrom (508), der an die erste Vielzahl von Magneten (208) angelegt wird, zu verändern, um die Änderungen des Unterschieds (212) zu verringern.

14. Wärmedämmungssystem (200) nach einem der Ansprüche 11 bis 13, wobei:
die zweite Vielzahl von Magneten (209) Elektromagneten aufweist; und
das Wärmedämmungssystem (200) ferner aufweist:
einen Controller (302), der eingerichtet ist, einen Erregerstrom (308) an die zweite Vielzahl von Magneten (209) anzulegen, um das zweite magnetische Feld (218) zu erzeugen.

15. Wärmedämmungssystem (200) nach Anspruch 14, wobei:
der Controller (302) eingerichtet ist, Änderungen des Unterschieds (212) zwischen der Außenfläche (210) des Behälters (204) und der Innenfläche (202) des Trägers (201) zu überwachen und den Erregerstrom (308), der an die zweite Vielzahl von Magneten (209) angelegt wird, zu ändern, um die Änderungen des Unterschieds (212) zu verringern.

## Revendications

1. Procédé (1000) d'assemblage d'un système d'isolation thermique (200) d'un aéronef (100, 600) l'aéronef (100, 600) comprenant un composant d'aéronef haute température (106, 602) et un composant d'aéronef thermosensible (206), le procédé comprenant :
le couplage (1002) d'une première pluralité d'aimants (208) à une surface intérieure (202) d'un support (201), la première pluralité d'aimants (208) étant configurée pour générer un premier champ magnétique (216) ;
le couplage thermique (1004) du composant d'aéronef haute température (106, 602) à une surface extérieure (222) du support (201);
le couplage (1006) d'une seconde pluralité d'aimants (209) à une surface extérieure (210) d'un conteneur (204), la seconde pluralité d'aimants (209) étant configurée pour générer un second champ magnétique (218) orienté à l'opposé du premier champ magnétique (216) ;
le couplage thermique (1008) du composant d'aéronef thermosensible (206) à une surface intérieure (220) du conteneur (204) ; et
le positionnement (1010) du conteneur (204) au sein d'un espace intérieur (214) du support (201), l'espace intérieur (214) étant défini par la surface intérieure (202) du support (201).

2. Procédé (1000) selon la revendication 1, dans lequel le couplage (1002) de la première pluralité d'aimants (208) comprend :
le couplage d'une première pluralité d'électro-aimants à la surface intérieure (202) du support (201) ; et
le couplage électrique de la première pluralité d'électro-aimants à une source de courant qui est configurée pour appliquer un courant d'excitation (508) pour générer le premier champ magnétique (216).

3. Procédé (1000) selon la revendication 1 ou 2, dans lequel le couplage (1006) de la seconde pluralité d'aimants (209) comprend :
le couplage d'une seconde pluralité d'électro-aimants à la surface extérieure (210) du conteneur (204) ; et
le couplage électrique de la seconde pluralité d'électro-aimants à une source de courant qui est configurée pour appliquer un courant d'excitation (308) pour générer le second champ magnétique (218).

4. Procédé (1000) de l'une quelconque des revendications 1 à 3, comprenant en outre :
l'application d'un revêtement réfléchissant les infrarouges sur la surface extérieure (210) du conteneur (204).

5. Procédé (1000) de l'une quelconque des revendications 1 à 4, comprenant en outre :
l'application d'un revêtement réfléchissant les infrarouges sur la surface intérieure (202) du support (201).

6. Procédé (1000) de l'une quelconque des revendications 1 à 5, dans lequel le couplage thermique (1004) du composant d'aéronef haute température (106, 602) à la surface extérieure (222) du support (201) comprend :
le couplage thermique d'une surface d'attaque de l'aéronef (100, 600) à la surface extérieure du support (201).

7. Procédé (1000) de l'une quelconque des revendications 1 à 6, dans lequel le couplage thermique (1008) du composant d'aéronef thermosensible (206) à la surface intérieure (220) du conteneur (204) comprend :
le couplage thermique de l'électronique de vol de l'aéronef (100, 600) à la surface intérieure du conteneur (204).

8. Procédé (1000) de l'une quelconque des revendications 1 à 7, comprenant en outre :
le couplage d'une conduite de vide à l'espace intérieur (214) du support (201) ; et
le couplage d'une source de vide à la conduite de vide.

9. Procédé (1000) de l'une quelconque des revendications 1 à 8, comprenant en outre :
le couplage d'une conduite de liquide de refroidissement à l'espace intérieur (214) du support (201) ; et
le couplage d'une source de liquide de refroidissement à la conduite de liquide de refroidissement.

10. Procédé (1000) selon la revendication 9, comprenant en outre le couplage d'une source de carburant de l'aéronef (100, 600) à la conduite de liquide de refroidissement.

11. Système d'isolation thermique (200) pour un aéronef (100, 600), l'aéronef (100, 600) comprenant au moins un composant d'aéronef haute température (106, 602) et au moins un composant d'aéronef thermosensible (206), le système d'isolation thermique de l'aéronef (100, 600) comprenant :
un support (201) ayant une surface intérieure (202) qui comprend une première pluralité d'aimants (208) configurée pour générer un premier champ magnétique (216), le support (201) ayant une surface extérieure (222) configurée pour être couplée thermiquement à l'au moins un composant d'aéronef haute température (106, 602) ; et
un conteneur (204) entouré par la surface intérieure du support (201), le conteneur (204) ayant une surface extérieure (210) qui comprend une seconde pluralité d'aimants (209) configurée pour générer un second champ magnétique (218), orienté à l'opposé du premier champ magnétique (216), le conteneur ayant également une surface intérieure (220), configurée pour être couplée thermiquement à l'au moins un composant d'aéronef thermosensible (206),
dans lequel le premier champ magnétique (216) et le second champ magnétique (218) sont configurés pour générer un écart (212) entre la surface intérieure du support (201) et la surface extérieure du conteneur (204) pour, en cours d'utilisation, réduire un transfert de chaleur depuis l'au moins un composant d'aéronef haute température (106, 602) vers l'au moins un composant d'aéronef thermosensible (206) pendant le fonctionnement de l'aéronef.

12. Système d'isolation thermique (200) selon la revendication 11, dans lequel :
la première pluralité d'aimants (208) comprend des électro-aimants ; et
le système d'isolation thermique comprend en outre :
un dispositif de commande (502) qui est configuré pour appliquer un courant d'excitation (508) à la première pluralité d'aimants (208) pour générer le premier champ magnétique (216).

13. Système d'isolation thermique (200) selon la revendication 12, dans lequel :
le dispositif de commande (502) est configuré pour surveiller des variations dans l'écart (212) entre la surface extérieure (210) du conteneur (204) et la surface intérieure (202) du support (201), et pour faire varier le courant d'excitation (508) appliqué à la première pluralité d'aimants (208) pour réduire les variations dans l'écart (212).

14. Système d'isolation thermique (200) de l'une quelconque des revendications 11 à 13, dans lequel :
la seconde pluralité d'aimants (209) comprend des électro-aimants ; et
le système d'isolation thermique (200) comprend en outre :
un dispositif de commande (302) qui est configuré pour appliquer un courant d'excitation (308) à la seconde pluralité d'aimants (209) pour générer le second champ magnétique (218).

15. Système d'isolation thermique (200) selon la revendication 14, dans lequel :
le dispositif de commande (302) est configuré pour surveiller des variations dans l'écart (212) entre la surface extérieure (210) du conteneur (204) et la surface intérieure (202) du support (201) et pour faire varier le courant d'excitation (308) appliqué à la seconde pluralité d'aimants (209) pour réduire les variations dans l'écart (212).
